# EUROPEAN PATENT SPECIFICATION

(11) **EP 1 577 330 B1**
(45) Date of publication and mention of the grant of the patent: **15.02.2012**
(21) Application number: 04254951.9
(22) Date of filing: 18.08.2004
(51) Int. Cl.: C08F 220/58, C08F 222/40, G03F 7/023, B41C 1/10

(54) **Copolymer, image-forming composition and plate for lithography**
Copolymer, bilderzeugende Zusammensetzung und Platte für Lithographie
Copolymère, composition pour la formation d'images et plaque pour l'impression lithographique

(30) Priority: 22.08.2003 JP 2003298043
(43) Date of publication of application: 21.09.2005
(73) Proprietor: Okamoto Chemical Industry Co., Ltd, Warabi-shi, Saitama-ken (JP)
(72) Inventor: Ozaki, Jun, c/o Okamoto Chemical Industry Co.. Ltd, Warabi-shi Saitama-ken (JP); Uozumi, Y., c/o Okamoto Chemical Industry Co.. Ltd, Warabi-shi Saitama-ken (JP)
(74) Representative: Tanner, James Percival

(56) References cited:
- PATENT ABSTRACTS OF JAPAN vol. 1998, no. 05, 30 April 1998 (1998-04-30) & JP 10 020489 A (KONICA CORP), 23 January 1998 (1998-01-23)
- PATENT ABSTRACTS OF JAPAN vol. 012, no. 166 (P-704), 19 May 1988 (1988-05-19) & JP 62 279327 A (MITSUBISHI CHEM IND LTD; others: 01), 4 December 1987 (1987-12-04)
- PATENT ABSTRACTS OF JAPAN vol. 017, no. 428 (P-1588), 9 August 1993 (1993-08-09) & JP 05 088369 A (OKAMOTO KAGAKU KOGYO KK), 9 April 1993 (1993-04-09)

## Description

### BACKGROUND OF THE INVENTION

### 1. FIELD OF THE INENTION

The present invention relates to base plates for lithographic printing plates. In particular, it relates to the base plates for so-called direct plate-making positive-type lithographic printing plates, which can be used for direct plate-making by receiving digital signals from a computer or the like, and to the base plates for positive-type lithographic printing plates that can be used conventional UV exposure.

### 2. DESCRIPTION OF RELATED ART

Conventionally methods of forming images using photosensitive layer components mainly comprising a O-quinone diazide compound and a binder resin such as novolac resin, wherein the exposure of ultraviolet light leads to photodecomposition at the exposed portions to increase solubility to a developing liquid, is known. These positive-type photosensitive lithographic printing plates are commonly referred to as conventional PS plates.

Recently, methods such as a direct plate-making method (thermally positive) have been developed, in which images are formed by using infrared laser exposure to produce heat in photosensitive layer mainly comprising a photothermal conversion material that absorbs infrared light and converts it to heat, such as infrared absorbing pigments, and a binder resin such as novolac resin, thus altering the structure of the resin by the generated heat and increasing solubility to a developing liquid.

However, the novolac resin used in these methods has poor adhesiveness to the substrate, fragile coating, inferior wear resistance, and is thus one of the drawbacks of conventional PS plates. This drawback is even more pronounced for thermally positive plates, for example lightly touched places or lightly rubbed places can become thin during developing (fingerprint rub-off phenomena), or suffer from peeling (abrasion phenomena) and other such deficiencies, and are generally thought susceptible to abrasions. Furthermore, both of these plates have many areas that require improvement, including their poor chemical resistance, in particular their extremely unsatisfactory print durability when using UV inks, as well as their poor solvent resistance against roller cleaning liquids for UV inks, plate surface cleaning liquids and other such plate cleaners, and susceptibility to image fading and the like.

In this regard, for example, Japanese Patent Provisional Publication No. 62-279327 A discloses the use of an acrylamide copolymer with a phenolic hydroxyl group, and Japanese Patent Provisional Publication No. 5-88369 A discloses the use of a copolymer with N-(4-hydroxyphenyl) maleimide as structural units, but both of these are insufficient in terms of chemical resistance (solvent resistance) and development tolerability.

Furthermore, in regard to increasing the chemical resistance (solvent resistance) of the thermally positive photosensitive layer, for example, Japanese Patent Provisional Publication No. 2003-21902 A discloses a base plate for a lithographic printing plate that is provided with a thermal positive-type photosensitive layer on a lower layer that contains a maleimide copolymer. However, sufficient chemical resistance (solvent resistance) is still lacking since the upper layer contains a novolac resin, and there is also the operational inconvenience related to arranging two layers.

### SUMMARY OF THE INVENTION

Consequently, an object of the present invention is to provide a base plate for a lithographic printing plate such as a conventional PS plate and a lithographic printing base plate for thermally positive plates that prevent the occurrence of the above-described fingerprint rub-off phenomena and abrasion phenomena and offer superior anti-abrasiveness and chemical resistance (solvent resistance), and that are provided with a photosensitive layer which has superior print durability for printing using UV inks.

As a result of intensive research, the present inventors found a way to achieve the above-described object even with a single layer coating, by including a specified copolymer in the photosensitive layer, thus resulting in the completion of the present invention.

Specifically, in the present invention, there is provided a copolymer comprising monomeric units shown in formula (I) and (II); an image-forming composition comprising the copolymer; and a base plate for a lithographic printing plate comprising a support structure, and a photosensitive layer thereon that contains the copolymer. 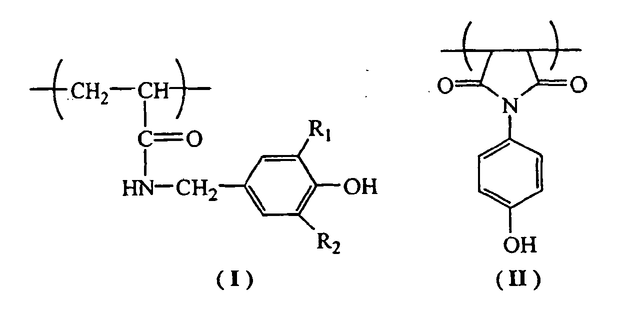 wherein R₁ and R₂ each independently indicates a C₁ to C₁₂ alkyl group.)

It is preferable for the base plate for a lithographic printing plate according to the present invention, that the photosensitive layer further comprises a photothermal conversion material which converts absorbed light to heat, and an alkali-soluble resin. It is preferable for the base plate for a lithographic printing plate according to the present invention, that the photosensitive layer further comprises a quinone diazide compound and an alkali-soluble resin.

As will be described in detail below, with a base plate for a lithographic plate, which includes both a direct printing plate that uses laser exposure and a conventional printing plate that uses UV exposure, which is provided with a photosensitive layer containing the copolymer according to the present invention, it is possible to achieve a printing plate that is superior with respect to fingerprint rub-off phenomena and anti-abrasiveness, and that offers superior solvent resistance and printing endurance even when using UV inks.

### DEATILED DESCRIPTION OF PREFERRED EMBODIMENTS

The following is a description of embodiments of the present invention. The present invention is in no way limited to these embodiments as described below. As will be described in detail below, according to the present invention, a copolymer is obtainable by copolymerizing an N-substituted acrylamide shown in formula (I'), an N-(4-hydroxyphenyl) maleimide shown in formula (II'), and an optional monomer comprising a group with an unsaturated bond that can be polymerized, in an appropriate solvent using a known polymerization initiator. 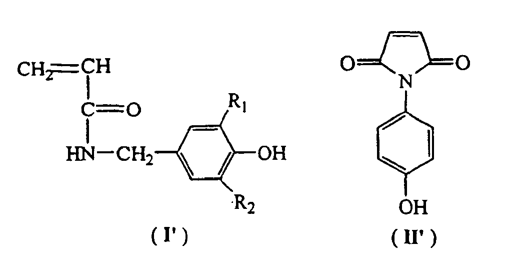 wherein R₁ and R₂ each independently indicates a C₁ to C₁₂ alkyl group.

By comprising a copolymer that is provided with the structural units indicated in the formulas (I) and (II), the present invention offers a base plate for a lithographic plate that is provided with a photosensitive layer which prevents the occurrence of fingerprint rub-off phenomena and abrasion phenomena, and that has superior anti-abrasiveness and chemical resistance (solvent resistance), and has superior print durability when printing using UV inks. This is because both the monomers indicated in the formulas (I') and (II') are resistant to dissolving in solvents, and copolymers that contain these also have superior solvent resistance, and as a result, a photosensitive layer that contains this copolymer has superior solvent resistance. Furthermore, including this copolymer in the photosensitive layer improves the dissolution resistance of the photosensitive layer against a developing liquid, and this also improves anti-abrasiveness.

The N-substituted acrylamide shown in formula (I') can be easily obtained, for example, by condensing in the presence of an acid catalyst an N-methylolacrylamide and an aromatic hydrocarbon that has a phenolic hydroxyl group. It is also possible to use a commercially available product. R₁ and R₂ in the formula (I') are each independently a C₁ to C₁₂ alkyl group, preferably a C₁ to C₄ alkyl group. Specific examples of R₁ and R₂ include a methyl group, an ethyl group, an n-propyl group, and an n-butyl group.

Furthermore, the N-substituted acrylamide shown in formula (I') is preferably N-(3,5-dimethyl-4-hydroxyphenyl) methylacrylamide.

The mixing proportion of the N-substituted acrylamide shown in the formula (I') in a copolymer of the present invention is preferably 1 to 50 wt%, more preferably 3 to 50 wt%, more preferably 5 to 50 wt%, and more preferably 10 to 45 wt% of the copolymer. When it is at least 1 wt%, in particular, at least 3, 5 or 10 wt%, in particular, the ease of dissolution in the alkaline aqueous solution used as a developing liquid is improved and chemical resistance (solvent resistance) is also improved. Conversely, when it is at most 50 wt% and, in particular, at most 45 wt%, there is no excessive dissolution in the alkaline aqueous solution, thus improving development stability in particular.

The mixing proportion of the N-(4-hydroxyphenyl) maleimide shown in the formula (II') in the above-described copolymer is preferably 5 to 60 wt% of the copolymer, and more preferably 10 to 55 wt%. When it is at least 5 wt% and, in particular, at least 10 wt%, in particular, the ease of dissolution in the alkaline aqueous solution used as a developing liquid is improved and sensitivity and chemical resistance (solvent resistance) are also improved. Conversely, when it is at most 60 wt% and, in particular, at most 55 wt%, there is no excessive dissolution in the alkaline aqueous solution, thus improving development stability.

The total weight of the structural units shown in the formulas (I) and (II) in the above-described copolymer is preferably 10 to 70 wt% of the copolymer, and more preferably 10 to 65 wt%. When it is at least 10 wt%, the ease of dissolution in the alkaline aqueous solution used as a developing liquid is improved and sensitivity and chemical resistance (solvent resistance) are also improved.

Conversely, when it is at most 70 wt% and, in particular, at most 65 wt%, there is no excessive dissolution in the alkaline aqueous solution, and is therefore preferable.

In the above-described copolymer, examples of other monomers that can be optionally added in addition to the N-substituted acrylamide shown in the formula (I') and the N-(4-hydroxyphenyl) maleimide shown in the formula (II') may include the monomers listed under (1) to (10) below.
(1) Monomers having a phenolic hydroxyl group. They include, for example, p-isopropenylphenol, o-hydroxystyrene, m-hydroxystyrene, p-hydroxystyrene, o-hydroxyphenyl acrylate, m-hydroxyphenyl acrylate, p-hydroxyphenyl acrylate, o-hydroxyphenyl methacrylate, m-hydroxyphenyl methacrylate and p-hydroxyphenyl methacrylate.
(2) Monomer having a sulfonamide group. For example, m-aminosulfonyl phenyl methacrylate, N-(p-aminosulfonyl phenyl) methacrylamide, N-(p-aminosulfonyl phenyl) acrylamide.
(3) Monomer having an active imide. For example, N-(p-toluenesulfonyl) methacrylamide, N-(p-toluenesulfonyl) acrylamide.
(4) Monomers having an aliphatic hydroxyl group. They include, for example, 2-hydroxyethyl acrylate, 2-hydroxyethyl methacrylate, 2-hydroxy-3-phenoxypropyl acrylate and 2-hydroxy-3-phenoxypropyl methacrylate.
(5) α,β-unsaturated carboxylic acids. They include, for example, acrylic acid, methacrylic acid and maleic anhydride.
(6) Monomers having an allyl group. They include, for example, allyl methacrylate and N-allylmethacrylamide.
(7) Alkyl acrylates and alkyl methacrylates. They include, for example, methyl acrylate, ethyl acrylate, propyl acrylate, butyl acrylate, amyl acrylate, hexyl acrylate, octyl acrylate, lauryl acrylate, glycidyl acrylate, methyl methacrylate, ethyl methacrylate, propyl methacrylate, butyl methacrylate, amyl methacrylate, hexyl methacrylate, octyl methacrylate, lauryl methacrylate and glycidyl methacrylate.
(8) Acrylamides and methacrylamides. They include, for example, acrylamide, N-methylolacrylamide, N-ethylacrylamide, N-hexylacrylamide, N-cyclohexylacrylamide, N-hydroxyethylacrylamide, N-phenylacrylamide, methacrylamide, N-methylolmethacrylamide, N-ethylmethacrylamide, N-hexylmethacrylamide, N-cyclohexylmethacrylamide, N-hydroxyethylmethacrylamide and N-phenylmethacrylamide.
(9) Styrenes. They include, for example, styrene, α-methylstyrene and chloromethylstyrene.
(10) N-Vinylpyrrolidone, N-vinylcarbazole, 4-vinylpyridine, acrylonitrile, methacrylonitrile and the like.

Further still, the copolymer may also be a copolymer with monomers that can be polymerized with the above-described monomers (the monomers indicated in the formulas (I') and (II') and the monomers listed in (1) through (10) above) and the above described monomers. Furthermore, the copolymer obtained by copolymerizing the above-described monomers may also be modified with, for example, glycidyl methacrylate or the like.

In the copolymer used in the composition of the present invention, it is possible to use one of the monomers indicated in the formula (I') or to use combinations of two or more of these monomers.

There is no particular limitation in regard to the manufacturing method of the above-described copolymer, and it may be manufactured in the same way as with manufacturing methods for ordinary acrylic copolymers. For example, a desired copolymer can be obtained by dissolving each monomer component in an appropriate solvent, adding a conventional radical polymerization initiator, then optionally heating for carrying out polymerization. The copolymer obtained in this manner has the weight-average molecular weight of preferably in the range of 1,000 to 100,000, and preferably in the range of 2,000 to 50,000 as measured by gel permeation chromatography (GPC) based on the weight of polystyrene. A copolymer with superior solvent resistance in particular may be obtained when the weight-average molecular weight is at least 1,000 and, in particular, at least 2,000. Also, when the mean molecular weight is at most 100,000 and, in particular, at most 50,000, particularly good dissolution is achieved for the solvent applied to the photosensitive liquid.

The solvent used in polymerizing the above-described copolymer include, but not limited to, methyl cellosolve, propylene glycol monomethyl ether, dioxane, methyl ethyl ketone, N,N-dimethyl formamide, and N,N-dimethylacetamide. Furthermore, the radical polymerization initiator used in polymerizing the above-described copolymer include, but not limited to, azobisisobutyronitrile and benzoyl peroxide. Although not limitated in particular, it is preferable that the quantity of solvent is 2 to 10 g with respect to 1 g of monomer. Furthermore, it is preferable that the quantity of added radical polymerization initiator is 0.1 to 1.0 wt% with respect to the total weight of monomer. When heating during polymerization, it is generally preferable that the temperature of the heat applied is approximately 60 to 120°C.

In the present invention, it is possible to use an individual copolymer of those described above, and it is also possible to use combinations of two or more of these. Furthermore, the photosensitive layer comprises the added copolymer in an amount of preferably 3 to 75 wt%, more preferably 5 to 65 wt%.
When it comprises at least 3 wt% and, in particular, at least 5 wt%, chemical resistance (solvent resistance) in particular is improved. When it comprises at most 75 wt% and, in particular, at most 65 wt%, there is no excessive dissolution in the alkaline aqueous solution, thus improving development stability.

There is no particular limitation to the photothermal conversion material used in the present invention as long as it is a compound that can absorb the light of an image exposing light source and convert the energy thereof into heat. A light absorbing pigment that has an absorption maximum in the wavelength range of 650 to 1,300 nm and a molar absorption coefficient ε at an absorption maximum of preferably at least 10⁵ may be particularly effective. The photothermal conversion material is used so that a physical change such as a structural change of the resin can be caused with the heat produced from the photothermal conversion material due to the irradiation of light, and so that solubility with respect to the developing liquid can be increased. And therefore, by further containing a photothermal conversion material, the photosensitive layer of the present invention may become a positive-type photosensitive layer in which solubility with respect to alkaline aqueous solutions is increased by laser exposure.

As the aforesaid photothermal conversion materials, cyanine dyes, squalium dyes, croconium dyes, azulenium dyes, phthalocyanine dyes, naphthalocyanine dyes, polymethine dyes, naphthoquinone dyes, thiopyrilium dyes, dithiol metal complex dyes, anthraquinone dyes, indoaniline metal complex dyes, intermolecular CT dyes and the like are preferred.

These dyes may be synthesized according to well-known methods. Alternatively, the following commercial products may also be used.

Nippon Kayaku Co., Ltd.: IR750 (anthraquinone dye), IR002, IR003 (aluminum dyes), IR820 (polymethine dye), IRG022, IRG033 (diimmonium dyes), CY-2, CY-4, CY-9, CY-10, CY-20.

Dainippon Ink and Chemicals, Incorporated: Fastogen blue 8120.

Midori Kagaku Co., Ltd.: MIR-101, 1011, 1021.

The aforesaid dyes are also sold by other suppliers including Nippon Kanko Shikiso Kenkyujo, Ltd., and Sumitomo Chemical Co., Ltd., Fuji Photo Film Co. Ltd.

In the present invention, the photosensitive layer may comprise the added photothermal conversion material in an amount of preferably 0.5 to 5 wt%, more preferably 0.6 to 4.5 wt%. When it comprises at least 0.5 wt% and, in particular, at least 0.6 wt%, in particular, sensitivity becomes high. When it is at most 5 wt% and, in particular, at most 4.5 wt%, the development properties of non-image areas (exposed areas) in particular are improved, which is preferable.

An alkali-soluble resin may be used in the present invention to increase the print durability and ink impression properties of non-exposed areas (image areas) of the thermally positive plate, and also to increase solubility with respect to a developing liquid in exposed areas. On the other hand, it is used to increase the print durability and ink impression properties of non-exposed areas (image areas) of conventional positive plates. It is preferable that the alkali-soluble resin used in the present invention is soluble or swells in an alkaline solution. Examples of such alkali-soluble resins include novolac resins, resol resins, polyvinylphenol resins, and copolymers of acrylic acid derivatives. It should be noted that, after exposure, the alkali-soluble resin may dissolve well in alkaline developing liquid. Furthermore, depending on such conditions as the alkali concentration of the developing liquid, the temperature of the developing liquid, and the development time, a portion of the alkali-soluble resin may also dissolve in the alkali developing liquid prior to exposure.

Novolac resins include, but not limited to, polycondensed mixtures in which at least one aromatic hydrocarbon such as phenol, o-cresol, m-cresol, p-cresol, 2,5-xylenol, 3,5-xylenol, resorcine, pyrogallol, bisphenol, bisphenol A, trisphenol, o-ethylphenol, m-ethylphenol, p-ethylphenol, propyl phenol, n-butyl phenol, t-butyl phenol, 1-naphthol, and 2-naphthol are polycondensed in the presence of an acid catalyst with an aldehyde such as formaldehyde, acetaldehyde, propionaldehyde, benzaldehyde, and furfural with a ketone such as acetone, methyl ethyl ketone, and methyl isobutyl ketone.

Paraformaldehyde and paraldehyde may be used respectively instead of formaldehyde and acetaldehyde. The mean molecular weight (hereafter "Mw") of the novolac resin convert to the weight of polystyrene as measured by gel permeation chromatography (GPC) is preferably in the range of 1,000 to 15,000, and, in particular, the range of 1,500 to 10,000 is particularly preferable.

It is possible to use commercially available novolac resins such as, for example, PSF-2803, PSF-2807 (manufactured by Gunei Chemical Industry Co., Ltd.), EP4020GS, EP5020G, EP6020G, (manufactured by Asahi Organic Chemicals Industry Co., Ltd), Hitanooru 1501(manufactured by Hitachi Chemical Co., Ltd.), BRM-565 (manufactured by Showa Highpolymer), and RV-95, RT-95 (manufactured by Gifu Serakku).

The polyvinyl phenol resins include, but not limited to, hydroxystyrenes such as o-hydroxystyrene, m-hydroxystyrene, p-hydroxystyrene, 2-(o-hydroxyphenyl) propylene, 2-(m-hydroxyphenyl) propylene, and 2-(p-hydroxyphenyl) propylene individually or as polymers of two or more or these. Examples of hydroxystyrenes include those that have halogens such as chlorine, bromine, iodine, and fluorine in an aromatic ring, or a substituted group such as a C₁ to C₄ alkyl substituted group, which follows that polyvinyl phenols include polyvinyl phenols having a halogen in an aromatic ring or a C₁ to C₄ alkyl substituted group.

Polyvinyl phenol resins may be obtained by polymerizing one or more hydroxystyrenes which may ordinary have a substituted group(s) in the presence of a radical polymerization initiator or a cationic polymerization initiator. Such a polyvinyl phenol resin may be partially hydrogenated. Furthermore, the polyvinyl phenol resin may be one in which a portion of OH groups are protected by a t-butoxycarbonyl group, a pyranyl group, a furanyl group or the like. The Mw of the polyvinyl phenol resin that is used is preferably in the range of 1,000 to 80,000 and, in particular, preferably in the range of 1,500 to 50,000.

When the Mw of the above-described novolac resin or polyvinyl phenol resin is above the lower limit of the prescribed range, particularly sufficient coating can be obtained and print durability can be improved, and when it is below the higher limit of the prescribed range, the solubility of unexposed areas to alkaline developing solutions can be improved and may avoid a cause of soiling.

There is no particular limitation, but copolymers of acrylic acids can be obtained by copolymerizing monomers selected from the below-exemplified (m1) to (m10) using a conventionally known method such as graft copolymerization, block copolymerization, and random copolymerization.
(m1) Monomers having a phenolic hydroxyl group. They include, for example, N-(4-hydroxyphenyl)acrylamide, N-(4-hydroxyphenyl)methacrylamide, p-isopropenylphenol, o-hydroxyphenyl acrylate, m-hydroxyphenyl acrylate, p-hydroxyphenyl acrylate, o-hydroxyphenyl methacrylate, m-hydroxyphenyl methacrylate and p-hydroxyphenyl methacrylate.
(m2) Monomer having a sulfonamide group. For example, m-aminosulfonyl phenyl methacrylate, N-(p-aminosulfonyl phenyl) methacrylamide, N-(p-aminosulfonyl phenyl) acrylamide.
(m3) Monomer having an active imide. For example, N-(p-toluenesulfonyl) methacrylamide, N-(p-toluenesulfonyl) acrylamide.
(m4) Monomers having an aliphatic hydroxyl group. They include, for example, 2-hydroxyethyl acrylate, 2-hydroxyethyl methacrylate, 2-hydroxy-3-phenoxypropyl acrylate and 2-hydroxy-3-phenoxypropyl methacrylate.
(m5) α,β-unsaturated carboxylic acids. They include, for example, acrylic acid, methacrylic acid and maleic anhydride.
(m6) Monomers having an allyl group. They include, for example, allyl methacrylate and N-allylmethacrylamide.
(m7) Alkyl acrylates and alkyl methacrylates. They include, for example, methyl acrylate, ethyl acrylate, propyl acrylate, butyl acrylate, amyl acrylate, hexyl acrylate, octyl acrylate, lauryl acrylate, glycidyl acrylate, methyl methacrylate, ethyl methacrylate, propyl methacrylate, butyl methacrylate, amyl methacrylate, hexyl methacrylate, octyl methacrylate, lauryl methacrylate and glycidyl methacrylate.
(m8) Acrylamides and methacrylamides. They include, for example, acrylamide, N-methylolacrylamide, N-ethylacrylamide, N-hexylacrylamide, N-cyclohexylacrylamide, N-hydroxyethylacrylamide, N-phenylacrylamide, methacrylamide, N-methylolmethacrylamide, N-ethylmethacrylamide, N-hexylmethacrylamide, N-cyclohexylmethacrylamide, N-hydroxyethylmethacrylamide and N-phenylmethacrylamide.
(m9) Styrenes. They include, for example, styrene, α-methylstyrene and chloromethylstyrene.
(m10) N-Vinylpyrrolidone, N-vinylcarbazole, 4-vinylpyridine, acrylonitrile, methacrylonitrile and the like.

The Mw of the copolymer of the acrylic acid to be used is preferably in the range of 1,000 to 500,000, and, in particular, preferably in the range of 1,500 to 300,000. When the Mw is higher than 1,000, preferably 1,500, particularly sufficient coating can be obtained, and when it is lower than 500,000, preferably 300,000, the solubility of unexposed areas to alkaline developing solutions can be improved and can successfully develop.

In the present invention, the aforesaid alkali-soluble resins may be used alone or in admixture of two or more. They are preferably added in an amount of 20 to 92% by weight and more preferably 25 to 85% by weight, based on the photosensitive layer. When the amount added is not less than 20%, particularly 25% by weight, the printing durability is particularly improved, while when it is not greater than 92%, particularly 85% by weight, the sensitivity is particularly improved.

In the present invention, a quinone diazide compound is photodecomposed with ultraviolet light or the like and converted chemically into an indene carboxylic acid so that the solubility of the layer can be increased with respect to the alkaline aqueous solution which is the developing liquid. And therefore, by further containing a quinone diazide compound, the photosensitive layer of the present invention becomes a positive-type photosensitive layer in which solubility with respect to alkaline aqueous solutions is increased by UV exposure. Examples of quinone diazide compounds include ester compounds of naphthoquinone-1,2-diazido-5-sulfonyl chloride or naphthoquinone-1,2-diazido-4-sulfonyl chloride with a compound that comprises a phenolic hydroxyl group.

The compound comprising a phenolic hydroxyl group that can be used include phenol, o-cresol, m-cresol, p-cresol, p-t-butyl phenol, catechol, resorcinol, hydroquinone, pyrogallol, bisphenol A, bisphenol S, hydroxybenzophenone, polyhydroxybenzophenone, as well as polycondensed resins of these phenols with aldehyde or ketone.

Examples of preferable polycondensed resins include phenol formaldehyde resin, o-cresol formaldehyde resin, m-cresol formaldehyde resin, p-cresol formaldehyde resin, m,p-mixed cresol formaldehyde resin (a condensed resin of a mixed cresol of m-cresol and p-cresol and formaldehyde), t-butylphenol formaldehyde resin, bisphenol A formaldehyde resin, bisphenol S formaldehyde resin, pyrogallol formaldehyde resin, pyrogallol acetone resin, hydroxybenzophenone formaldehyde resin, and polyhydroxybenzophenone formaldehyde resin.

The above-described ester compounds of a naphthoquinone diazide compound and a compound that comprises a phenolic hydroxyl group, that is, the quinonediazide compound used in the present invention, can be synthesized using a conventional known synthesizing method. For example, esterification can be achieved-by using a dioxane or an acetone as a solvent into which naphthoquinone diazidosulfonyl chloride and a compound with a phenolic hydroxyl group are given, and adding dropwise an alkali such as sodium carbonate, sodium hydrogen carbonate, or triethylamine until the equivalence point is reached.

The amount of quinone diazide compound contained in the photosensitive layer of the present invention is preferably 5 to 60 wt% and more preferably 10 to 50 wt%. When it is at least 5 wt% and, in particular, at least 10 wt%, deterioration of the development latitude (development width), such as the image fading during developing, is eliminated. When it is at most 60 wt% and, in particular, at most 50 wt%, sensitivity in particular is improved. Thus, the range is preferable.

In addition to the above-mentioned elements, acid generator, coloring agent, oil-sensitive resins, sensitivity enhancing agents, surface active agents, and plasticizers may be further added as required to the photosensitive layer of the present invention to the extent that doing so does not harm the effect of the present invention.

The acid generator used in the present invention is a compound which can generate an acid when the base plate for a lithographic printing plate of the present invention is irradiated with light. That is, when the base plate for a lithographic printing plate is irradiated with light, the photothermal conversion material absorbs the light and instantaneously produces heat, for example, of several hundred degrees. Owing to the heat so produced, the acid generator is decomposed to generate an acid. Preferred acid generators include, for example, the BF₄⁻, PF₆⁻, SbF₆⁻, SiF₆²⁻ and ClO₄⁻ salts of diazonium, phosphonium, sulfonium and iodonium.

Other usable acid generators are organic halogen compounds. Among such organic halogen compounds, triazines having a halogen-substituted alkyl group and oxadiazoles having a halogen-substituted alkyl group are preferred, and s-triazines having a halogen-substituted alkyl group are especially preferred. Specific examples thereof include 2-(p-methoxyphenyl)-4,6-bis(trichloromethyl)-s-triazine, 2- (p-methoxynaphthyl)-4,6-bis(trichloromethyl)-s-triazine and 2-(p-methoxystyryl)-4,6-bis(trichloromethyl)-s-triazine.

In the present invention, the amount of the acid generator added is preferably from 0.1 to 20% by weight and more preferably from 0.2 to 15% by weight, based on the photosensitive layer. When the amount added is not less than 0.1%, particularly 0.2% by weight, the sensitivity can be improved, while when it is not greater than 20%, particularly 15% by weight, each component of the photosensitive layer will become particularly soluble in the solvent used for the dissolution thereof.

A coloring agent may be used in the photosensitive layer of the present invention in order to make images easier to see. Preferable examples of such coloring agents include oil soluble dyes and basic dyes. Specific examples include crystal violet, malachite green, Victoria blue, methylene blue, ethyl violet, rhodamine B, Victoria pure blue BOH (manufactured by Hodogaya Chemical Co., Ltd), oil blue 613 (manufactured by Orient Chemical Industries, Ltd) and oil green. The weight of these dyes to be added is preferably 0.05 to 5.0 wt% of the photosensitive layer and more preferably 0.1 to 4.0 wt%. When it is at least 0.05 wt% and, in particular, at least 0.1 wt%, the image formation layer is sufficiently colored and the image in particular becomes easy to see. When it is at most 5.0 wt% and, in particular, at most 4.0 wt%, dye is inhibited from residing on the non-image areas after developing. Thus, the range is therefore preferable.

Furthermore, oil-sensitive resins may be added to the photosensitive layer of the present invention in order to improve the lipophobicity (lipophilic nature) of the photosensitive layer. As the aforesaid oil-sensitive resin, there may be used, for example, a condensation product formed from a phenol substituted with one or more alkyl groups of C₃ to C₁₅ and an aldehyde, as described in Japanese Patent Provisional Publication No. 50-125806/'75; or a t-butylphenol-formaldehyde resin.

Examples of sensitivity enhancing agents include cyclic acid anhydrides, phenols, organic acids, and leuco pigments. Examples of cyclic acid anhydrides that can be used include phthalic anhydride, tetrahydro phthalic anhydride, hexahydro phthalic anhydride, tetrachloro phthalic anhydride, maleic anhydride, chloro maleic anhydride, succinic acid anhydride, and pyromellitic acid anhydride.

Moreover, in order to enhance its sensitivity, the image-forming composition of the present invention may further comprise a phenol, an organic acid or a leucopigment as required. Preferred phenols includes bisphenol A, p-nitrophenol, p-ethoxyphenol, 2,4,4'-trihydroxybenzophenone, 2,3,4-trihydroxybenzophenone, 4-hydroxybenzophenone, 4,4',4"-trihydroxytriphenylmethane, 4,4',3",4"-tetrahydroxy-3,5,3',5'-tetramethyltriphenylmethane and the like.

Preferred organic acids include sulfonic acids, sulfinic acids, alkylsulfuric acids, phosphonic acids, phosphoric esters, carboxylic acids and the like, as described in Japanese Patent Provisional Publication No. 60-88942/'85, Japanese Patent Provisional Publication No. 2-96755/'90 and the like. Specifically, they include p-toluenesulfonic acid, dodecylbenzenesulfonic acid, p-toluenesulfinic acid, ethylsulfuric acid, phenylphosphonic acid, phenylphosphinic acid, phenyl phosphate, diphenyl phosphate, benzoic acid, isophthalic acid, adipic acid, toluylic acid, 3,4-dimethoxybenzoic acid, phthalic acid, terephthalic acid, 4-cyclohexene-1,2-dicarboxylic acid, erucic acid, lauric acid, n-undecanoic acid, ascorbic acid and the like.

Preferred leucopigments include 3,3-bis(4-dimethylaminophenyl)-6-dimethylaminophthalide, 3- (4-diethylamino-2-ethoxyphenyl)-3-(1-ethyl-2-methylindol-3-yl)-4-azaphthalide, 3-(4-diethylaminophenyl)-3-(1-ethyl-2-methylindol-3-yl)phthalide, 3,3-bis(4-diethylamino-2-ethoxyphenyl)-4-azaphthalide, 3,6,6'-tris(dimethylamino)spiro[fluorene-9,3'-phthalide], 3,3-bis(1-n-butyl-2-methylindol-3-yl)phthalide and the like.

It is preferable that the proportion occupied by phenols, organic acids, and leuco pigments in the photosensitive layer is in the range of 0.05 to 20.0 wt%, or more preferably 0.1 to 15.0 wt%, or particularly preferably 0.1 to 10.0 wt%.

Furthermore, in order to expand its treating stability to developing conditions, a nonionic surface-active agent as described in Japanese Patent Provisional Publication Nos. 62-251740/'87 and 3-208514/'91, or an amphoteric surface-active agent as described in Japanese Patent Provisional Publication Nos. 59-121044/'84 and 4-13149/'92 may be added to the photosensitive layer of the present invention. Suitable examples of the nonionic surface-active agent include sorbitan tristearate, sorbitan monopalmitate, sorbitan trioleate, stearic acid monoglyceride, polyoxyethylene nonylphenyl ether, and the like. Suitable examples of the amphoteric surface-active agent include alkyldi(aminoethyl)glycine, alkylpolyaminoethylglycine hydrochloride, 2-alkyl-N-carboxyethyl-N-hydroxyethylimidazolinium betaine, N-tetradecyl-N,N-betaine type surface-active agents (e.g., the one commercially available from Dai-ichi Kogyo Seiyaku Co., Ltd. under the trade name of "Amogen K") and the like. The aforesaid nonionic surface-active agent or amphoteric surface-active agent is preferably present in an amount of 0.05 to 15% by weight and more preferably 0.1 to 15% by weight, based on the total solids of the photosensitive layer. When not less than 0.05%, particularly 0.1% by weight, development properties can be particularly improved, and when not greater than 15% by weight, development properties may become slow to improve stability for development.

It is also possible to add plasticizers to the photosensitive layer of the present invention in order to provide qualities of flexibility and the like to the coating. Examples of these that may be used include butyl phthalyl, polyethylene glycol, tributyl citric acid, diethyl phthalate, dibutyl phthalate, dihexyl phthalate, dioctyl phthalate, trichlene phosphoric acid, trioctyl phosphoric acid, and tributyl phosphoric acid.

The photosensitive layer according to the present invention may be obtained by applying sensitizing solution with above components in solvent onto an appropriate support structure. The aforesaid solvent include, but not limited to, methanol, ethanol, propanol, methylene chloride, ethyl acetate, tetrahydrofuran, propylene glycol monomethyl ether, propylene glycol monoethyl ether, methyl cellosolve, ethyl cellosolve, methyl cellosolve acetate, ethyl cellosolve acetate, dimethylformamide, dimethyl sulfoxide, dioxane, acetone, cyclohexanone, trichloroethylene and methyl ethyl ketone. These solvents may be used alone or in admixture of two or more. The concentration of the above component (the total solids comprising additives) is preferably from 1 to 50% by weight.

The method for applying the solvent may be carried out in various ways, for example, spin coating, extrusion coating, bar coater coating, roll coating, air knife coating, dip coating and curtain coating. The amount of the photosensitive layer applied is preferably from 0.5 to 5.0 g/m² on a solid basis, though it may vary with the end use.

Examples of the aforesaid support structure include metal plates formed of aluminum, zinc, copper, steel or the like; metal plates coated with chromium, zinc, copper, nickel, aluminum, iron or the like by electroplating or vapor deposition; paper, plastic films and glass plates; resin-coated paper; and hydrophilized plastic films.

It is preferable that polyester film or an aluminum plate is used as the support structure in the present invention, and aluminum plates are preferable in particular for their dimensional stability and comparatively low cost. Suitable aluminum plates include pure aluminum plates and alloy plates that have aluminum as a main constituent and contain a small amount of another element. Moreover, it is also possible to use a plastic film on which aluminum has been laminated or vapor-deposited. Therefore, there is no specified composition for the aluminum plates that can be applied in the present invention, and aluminum plates of conventional known and used materials can be suitably used. The thickness of the aluminum plates used in the present invention may be in the range of approximately 0.1 to 0.5 mm, and preferably 0.15 to 0.3 mm.

Degreasing may be performed using, for example, a surface active agent or an alkaline aqueous solution or the like in order to remove rolling oil from the surface before performing surface roughening on the aluminum plate. There are various methods for performing surface roughening on the surface of the aluminum plate. For example, there are mechanical surface roughening methods, electrochemical surface roughening methods, and methods in which selective dissolution is performed chemically on the surface of the plate. Any known method, such as brush polishing, ball polishing, blast polishing, and buff polishing, can be used as a mechanical method. Furthermore, electrochemical surface roughening methods include methods using an alternating current or a direct current in an electrolytic solution of hydrochloric acid or nitric acid. It is also possible to use a method disclosed in Japanese Patent Provisional Publication No.53-123204 A, in which a mechanical method and an electrochemical method are combined. After optional alkaline etching and neutralization, an aluminum plate on which surface roughening has been performed may be subjected to anodization to increase water retentivity and wear resistance of the surface to a desired level. Electrolytes that are used in anodization of aluminum plates generally include sulfuric acid, phosphoric acid, oxalic acid, chromic acid, or mixtures thereof.

As the conditions for performing anodization vary depending on the electrolyte used, the conditions cannot be specified absolutely, but it may be generally suitable that the concentration of the electrolyte is in the range of 1 to 60 wt% of the solution, with a liquid temperature in the range of 5 to 60°C, an electric current density in the range of 2 to 50 A/dm², a voltage in the range of 1 to 100 V, and an electrolysis time in the range of 5 seconds to 3 minutes. A suitable amount of anodic oxidation coating is in the range of 0.5 to 4.0 g/m². This is preferable since wear resistance in particular is improved when it is at least 0.5 g/m² and dyes or the like in particular are inhibited from sinking into the anodization pores when it is at most 4.0 g/m².

After anodization, the aluminum plate may further be subjected to after-treatments including, for example, chemical conversion treatment with a solution containing an alkali metal silicate, sodium phosphate, sodium fluoride, zirconium fluoride, alkyl titanate, trihydroxybenzoic acid or a mixture thereof; sealing treatment by dipping into a hot aqueous solution or with a steam bath; coating treatment with an aqueous solution of strontium acetate, zinc acetate, magnesium acetate or calcium benzoate; and front or rear surface coating treatment with polyvinyl pyrrolidone, polyaminesulfonic acid, polyvinylphosphonic acid, polyacrylic acid or polymethacrylic acid.

Furthermore, an aluminum or other substrate which has been subjected to a surface treatment as described in Japanese Patent Provisional Publication No. 10-297130/'98 can also be used as the aforesaid substrate.

It is preferable that the laser light source for irradiating the base plate for lithographic printing plates of the present invention is a light source that has an emitted light wavelength in the range of near infrared to infrared, with solid state lasers and semiconductor lasers being preferable. An emitted light wavelength in the range of 760 to 850 nm is preferable.
Furthermore, a carbon arc lamp, a mercury lamp, a metal halide lamp, a xenon lamp, or a chemical lamp may be used as a light source for UV exposure. A preferable range of emitted light wavelength is 300 to 500 nm.

As the developing solution used to develop the base plate for a lithographic printing plate of the present invention, an aqueous alkaline developing solution is preferred. Examples of the aqueous alkaline developing solution include aqueous solutions of alkali metal salts such as sodium hydroxide, potassium hydroxide, sodium carbonate, potassium carbonate, sodium metasilicate, potassium metasilicate, sodium secondary phosphate and sodium tertiary phosphate.

Moreover, an activator may be added to the aforesaid aqueous alkaline solutions. As the aforesaid activator, there may be used an anionic surface-active agent or an amphoteric surface-active agent may be used.

Usable examples of the aforesaid anionic surface-active agent include sulfuric esters of alcohols of C₈ to C₂₂ (e.g., polyoxyethylene alkylsulfate sodium salt), alkylarylsulfonic acid salts (e.g., sodium dodecylbenzenesulfonate, polyoxyethylene dodecylphenylsulfate sodium salt, sodium alkylnaphthalenesulfonate, sodium naphthalenesulfonate, and formalin condensate of sodium naphthalenesulfonate), sodium dialkylsulfoxylates, alkyl ether phosphoric esters and alkyl phosphates. Preferred examples of the amphoteric surface-active agent include alkylbetaine type and alkylimidazoline type surface-active agents. Furthermore, a water-soluble sulfurous acid salt such as sodium sulfite, potassium sulfite, lithium sulfite or magnesium sulfite may also be added to the aforesaid aqueous alkaline solutions.

### EXAMPLE

The present invention is further illustrated by the following examples. However, these examples are not to be construed to limit the scope of the invention.

### Synthesis of copolymers (a) to (e) and comparative copolymers (f) and (g) wherein (a) and (c) do not fall under the invention, but rather contain monomeric units of formula (I) wherein R₁ and R₂ are hydrogen.

The 200 g of N,N-dimethylformamide as a reaction solvent and a mixture of the structural units shown in Table 1 below were given into a one-liter four-mouth flask provided with an agitator and cooling piping. After heating the inside of the flask to 90°C, then adding 0.4 g of azobisisobutyronitrile and performing nitrogen gas replacement, the mixture was agitated for 5 hours at 90°C. After the completion of the reaction, the reaction compound was put into 10 L of water, then filtered and dried.

**table 1**

| Copolymer | structural unit (wt%) | | | | | | |
|---|---|---|---|---|---|---|---|
| | HPMAM | DMHPMAM | HPMI | AN | MMA | HEMA | NPMA |
| (a) | 20 | | 30 | 35 | 10 | 5 | |
| (b) | | 20 | 30 | 35 | 10 | 5 | |
| (c) | 20 | | 35 | 30 | 15 | | |
| (d) | | 20 | 35 | 30 | 15 | | |
| (e) | | 20 | 30 | 30 | 10 | | 10 |
| (f) | | | 50 | 30 | 20 | | |
| (g) | | 50 | | 30 | 20 | | |

| | | | | | | | |
|---|---|---|---|---|---|---|---|
| HPMAM: N-(4-hydroxyphenyl) methylacrylamide, DMHPMAM: N-(3,5-dimethyl-4-hydroxyphenyl methylacrylamide, HPMI: N-(4-hydroxyphenyl) maleimide, AN: acrylonitrile, MMA: methyl methacrylate, HEMA: 2-hydroxyethyl methacrylate, NPMA: N-(p-amino sulfonyl phenyl) methacrylamide. | | | | | | | |

After alkaline degreasing was performed on the 0.24 mm thick aluminum (material 1050), the surface was polished with a nylon brush while applying an aqueous suspension of pumice stone and then rinsed well. Next, a 70°C, 15 wt% aqueous solution of sodium hydroxide was poured onto the aluminum for 5 seconds, and etching of 3g/m² was performed on the surface, then rinsed again. Following this, electrolytic surface roughening was performed in a 1N hydrochloric acid solution at 200 coulomb/dm². After further rinsing, etching was again performed on the surface with a 15 wt% aqueous solution of sodium hydroxide and, after rinsing, the aluminum was soaked in a 20 wt% aqueous solution of nitric acid, then de-smutted. Next, anodization was performed in a 15 wt% aqueous solution of nitric acid and a 1.8 g/m² oxidation coating was formed, then, after rinsing, finishing was performed with a 50°C, 1 wt% potassium fluoride solution, followed by rinsing and drying.

### Examples 1 to 5

Next, 5 types of photosensitive liquids A to E were prepared by varying the types of copolymers in the photosensitive layer. Liquids A and C do not fall under the invention as they contain copolymers (a) or (c) of table I. These photosensitive liquids were applied to the above-described aluminum plates, after the plates were dried, so as to have a film thickness of 2.0 g/m² and dried for 20 minutes at 100°C, thus obtaining the lithographic printing plates of Examples 1 to 5. It should be noted that the copolymers used in the photosensitive liquids A to E are shown in Table 2.

### (Photosensitive liquids A to E)

Copolymer (1.0 g)
Novolac resin (PSF-2803) (manufactured by Gunei Chemical Industry Co., Ltd.) (2.0 g)
Novolac resin (PSF-2807) (manufactured by Gunei Chemical Industry Co., Ltd.) (0.75 g)
Infrared light absorbing agent: cyanine compound A listed below (0.07 g)
2-(p-methoxyphenyl)-4, 6-bis(trichloromethyl)-s-triazine (0.02 g)
Dye: oil blue 613 (manufactured by Orient Chemical Industries, Ltd) (0.01g)
Solvent: propylene glycol monomethyl ether/methyl cellosolve acetate = 45 ml/5 ml

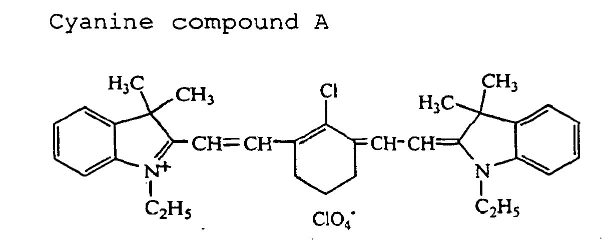

### Comparative Examples 1 and 2

Next, instead of copolymers (a) - (e), comparative copolymers were used in the photosensitive liquid as comparative examples, and photosensitive liquids F and G were prepared in the same manner as Example 1. The photosensitive liquids were applied to the same type of aluminum plates as used in Example 1 to manufacture the lithographic printing plates of Comparative Examples 1 and 2. It should be noted that the comparative copolymers used in the photosensitive liquids F and G are shown in Table 2.

### Comparative Example 3

A photosensitive liquid H was prepared as a comparative example, and this photosensitive liquid was applied to the same type of aluminum plates as used in Example 1 to manufacture the lithographic printing plates of Comparative Example 3.

### (Photosensitive liquid H)

Novolac resin (PSF-2803) (manufactured by Gunei Chemical Industry Co., Ltd.) (2.5 g)
Novolac resin (PSF-2807) (manufactured by Gunei Chemical Industry Co., Ltd.) (1.25 g)
Infrared light absorbing agent: cyanine compound A listed above (0.07 g)
2-(p-methoxyphenyl)-4, 6-bis(trichloromethyl)-s-triazine (0.02 g)
Dye: oil blue 613 (manufactured by Orient Chemical Industries, Ltd) (0.01g)
Solvent: propylene glycol monomethyl ether/methyl cellosolve acetate = 45 ml/5 ml

### Performance evaluations of the lithographic printing plates

Performance evaluations were carried out on the lithographic printing plates of Examples 1 to 5 and Comparative Examples 1 to 3, which were manufactured as described above, according to the below-described criteria.

### Evaluations of fingerprint rub-off and anti-abrasiveness

After a test pattern was written on the thus-obtained lithographic printing plate to form an image pattern with an exposure value of 130 mj/cm² using a semiconductor laser with a wavelength of 830 nm (a TrendSetter 400 QTM manufactured by Creo Inc.), locations were made in which non-exposed areas (image solid areas) were rubbed by finger and locations in which a 100 µm diameter pin with a 1 g weight placed on it was run along the image surface. Next, the plate was developed in an automatic developing device (PK-1310 II) using a 12 times diluted developing liquid No. 4 for Silvan positive plates manufactured by Okamoto Chemical Company. The extent of film deterioration of the image solid areas (fingerprint rub-off) and conditions of peeling (anti-abrasiveness) were evaluated. The results are shown in Table 2 below.

### Evaluation of print durability with UV ink

Printing was carried out with the above-described lithographic printing plates on high quality paper using UV ink (Flash Dry black APN manufactured by Toyo Ink Mfg. Co., Ltd). At this time, the task of rubbing the plate surface with Best Cure plate washing liquid, which is manufactured by T&K Toka Co., Ltd, was performed for every 1,000 sheets. The numbers of sheets printed until the solid areas deteriorated were recorded and are shown in Table 2 below.

### Evaluation of solvent resistance

The printing plates were soaked in undiluted UV ink rinsing liquid Daicure oil rinse A (manufactured by Dainippon Ink And Chemicals, Inc.) and the times taken until the image areas were affected and starting to dissolve were compared. The results are shown in Table 2 below wherein examples 2, 4 and 5 fall under the invention and examples 1 and 3 and the comparative examples do not

**Table 2**

| Lithographic printing plate | Copolymer used | Fingerprint rub-off | Anti-abrasiveness | Print durability | Solvent resistance |
|---|---|---|---|---|---|
| Example 1 (photosensitive liquid A) | Copolymer (a) | A | A | 40,000 | At least 20 minutes |
| Example 2 (photosensitive liquid B) | Copolymer (b) | A | A | 40,000 | At least 20 minutes |
| Example 3 (photosensitive (c) liquid C) | Copolymer (c) | A | A | 40,000 | At least 20 minutes |
| Example 4 (photosensitive liquid D) | Copolymer (d) | A | A | 50,000 | At least 20 minutes |
| Example 5 (photosensitive liquid E) | Copolymer (e) | A | A | 50,000 | At least 20 minutes |
| Comparative example 1 (photosensitive liquid F) | Copolymer (f) | A | B | 15,000 | Within 10 minutes |
| Comparative example 2 (photosensitive liquid G) | Copolymer (g) | A | B | 20,000 | Within 10 minutes |
| Comparative example 3 (photosensitive liquid H) | None | C | C | 1,000 | Within 1 minute |

### Examples 6 to 10

Varying the types of copolymers in the photosensitive liquid, five types of photosensitive liquids I to M were prepared wherein liquids I and K do not fall under the invention as they contain copolymers (a) or (c) of table I. These photosensitive liquids were applied to the same type of aluminum plates as used in Example 1 using a 0.2 mm diameter wire bar, and drying was performed for 10 minutes at 100°C so as to have a film thickness of 2.0 g/m² after drying, thus obtaining the lithographic printing plates of Examples 6 to 10. It should be noted that the copolymers used in the photosensitive liquids I to M are shown in Table 3.

### (Photosensitive liquids I to M)

Copolymer (5.0 g)
Novolac resin (PSF-2803) (manufactured by Gunei Chemical Industry Co., Ltd.) (0.5 g)
Novolac resin (PSF-2807) (manufactured by Gunei Chemical Industry Co., Ltd.) (0.5 g)
Ester compound of naphthoquinone-1,2-diazido-5-sulfonyl chloride and pyrogallol acetone resin (2.5 g)
2-(p-methoxyphenyl)-4,6-bis(trichloromethyl)-s-triazine (0.1 g)
Dye: oil blue 613 (manufactured by Orient Chemical Industries, Ltd) (0.2 g)
Solvent: dimethyl formamide/methyl cellosolve = 30 ml/40 ml

### Comparative Examples 4 and 5

Next, instead of copolymers (a) to (e), comparative copolymers were used in the photosensitive liquid as comparative examples, and photosensitive liquids N and O were prepared in the same manner as Example 6. The photosensitive liquids were applied to the same type of aluminum plates as used in Example 1 to manufacture the lithographic printing plates of Comparative Examples 4 and 5. It should be noted that the comparative copolymers used in the photosensitive liquids N and O are shown in Table 3.

### Comparative Example 6

A photosensitive liquid P was prepared as a comparative example, and this photosensitive liquid was applied to the same type of aluminum plates as used in Example 1 to manufacture the lithographic printing plates of Comparative Example 6.

### (Photosensitive liquid P)

Novolac resin (PSF-2803) (manufactured by Gunei Chemical Industry Co., Ltd.) (3.0 g)
Novolac resin (PSF-2807) (manufactured by Gunei Chemical Industry Co., Ltd.) (3.0 g)
Ester compound of naphthoquinone-1,2-diazido-5-sulfonyl chloride and pyrogallol acetone resin (2.5 g)
2-(p-methoxyphenyl)-4,6-bis(trichloromethyl)-s-triazine (0.1 g)
Dye: oil blue 613 (manufactured by Orient Chemical Industries, Ltd) (0.2 g)
Solvent: dimethyl formamide/methyl cellosolve = 30 ml/40 ml

### Performance evaluations of the lithographic printing plates

Performance evaluations were carried out on the lithographic printing plates of Examples 6 to 10 and Comparative Examples 4 to 6, which were manufactured as described above, according to the below-described criteria.

### Evaluations of fingerprint rub-off

After a test pattern was burned onto the thus-obtained lithographic printing plate from a distance of 1 m for approximately 60 seconds using a UV exposing device (manufactured by Kuranami Co., Ltd) equipped with a 6 KW metal halide lamp, locations were intentionally made in which non-exposed areas and 40% screen tint areas were rubbed by finger and pressed by finger. Next, the plate was developed in an automatic developing device (PK-1310 II) using a 15 times diluted developing liquid No. 4 for Silvan positive plates manufactured by Okamoto Chemical Company. The extent of film deterioration of the image solid areas and screen tint areas (fingerprint rub-off) were evaluated. The results are shown in Table 3 below.

### Evaluation of print durability with UV ink

Printing was carried out with the above-described lithographic printing plates on high quality paper using UV ink (Flash Dry black APN manufactured by Toyo Ink Mfg. Co., Ltd). At this time, the task of rubbing the plate surface with Best Cure plate washing liquid, which is manufactured by T&K Toka Co., Ltd, was performed for every 1,000 sheets. The numbers of sheets printed until the solid areas deteriorated were recorded and are shown in Table 3 below.

### Evaluation of solvent resistance

The printing plates were soaked in undiluted UV ink rinsing liquid Daicure oil rinse A (manufactured by Dainippon Ink And Chemicals, Inc.) and the times taken until the image areas were affected and starting to dissolve were compared. The results are shown in Table 3 below, wherein examples 7, 9 and 10 fall under the invention and examples 6 and 8 and the comparative examples do not.

**Table 3**

| Lithographic printing plate | Copolymer used | Fingerprint rub-off | Print durability | Solvent resistance |
|---|---|---|---|---|
| Example 6 (photosensitive liquid I) | Copolymer (a) | A | 30,000 | At least 20 minutes |
| Example 7 (photosensitive liquid J) | Copolymer (b) | A | 30,000 | At least 20 minutes |
| Example 8 (photosensitive liquid K) | Copolymer (c) | A | 30,000 | At least 20 minutes |
| Example 9 (photosensitive liquid L) | Copolymer (d) | A | 40,000 | At least 20 minutes |
| Example 10 (photosensitive liquid M) | Copolymer (e) | A | 40,000 | At least 20 minutes |
| Comparative example 4 (photosensitive liquid N) | Copolymer (f) | A | 10,000 | Within 10 minutes |
| Comparative example 5 (photosensitive liquid O) | Copolymer (g) | A | 15,000 | Within 10 minutes |
| Comparative example 6 (photosensitive liquid P) | None | C | 1,000 | Within 1 minute |

| | | | | |
|---|---|---|---|---|
| Evaluation criteria Fingerprint rub-off: A = no abnormalities evident in image areas C = image solid area portions rubbed by finger approximately half thinner, and fingerprint film deterioration in screen tint areas | | | | |

As can be seen from Table 3, with either a direct printing plate, which is exposed by laser, or a conventional printing plate, which is exposed by UV light, that is provided with a photosensitive layer that contains a copolymer according to the present invention, it is possible to obtain a printing plate that has superior performance with respect to fingerprint rub-off phenomena and anti-abrasiveness, and that has superior solvent resistance and print durability when using UV inks.

## Claims

1. A copolymer comprising monomeric units shown in formula (I) and (II): 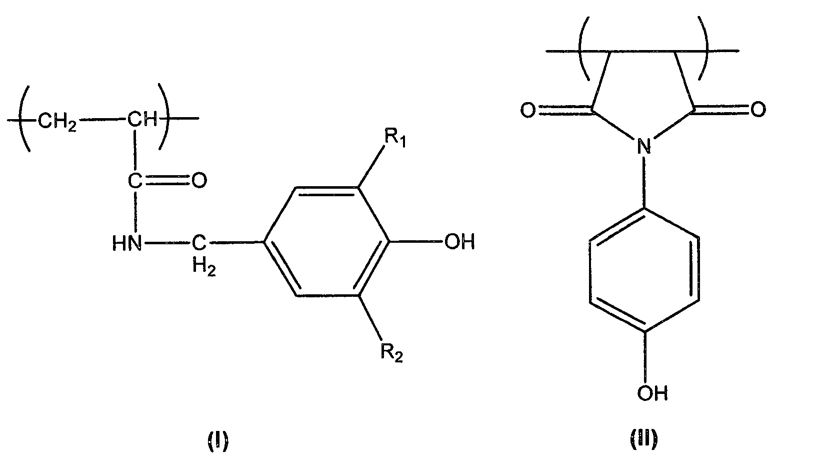 wherein R₁ and R₂ each independently indicate a C₁ to C₁₂ alkyl group.

2. An image-forming composition comprising the copolymer according to claim 1.

3. A base plate for a lithographic printing plate comprising a support structure, and a photosensitive layer thereon that comprises the copolymer according to claim 1.

4. The base plate for a lithographic printing plate according to claim 3, wherein the photosensitive layer further comprises a photothermal conversion material which can convert absorbed light to heat, and an alkali-soluble resin.

5. The base plate for a lithographic printing plate according to claim 3, wherein the photosensitive layer further comprises a quinone diazide compound and an alkali-soluble resin.

## Patentansprüche

1. Copolymer, das in Formel (I) und (II) gezeigte monomere Einheiten aufweist: 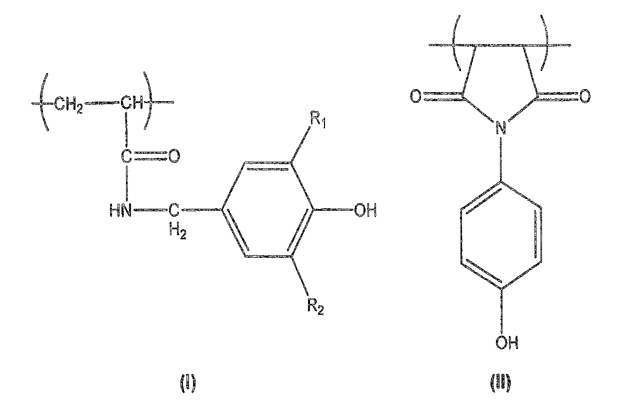 wobei R₁ und R₂ jeweils unabhängig eine C₁- bis C₁₂-Alkylgruppe abgeben.

2. Bilderzeugende Zusammensetzung, die ein Copolymer gemäß Anspruch 1 umfasst.

3. Basisplatte für eine lithografische Druckplatte, die eine Trägerstruktur und eine photosensitive Schicht darauf umfasst, die das Copolymer gemäß Anspruch 1 umfasst.

4. Basisplatte für eine lithografische Druckplatte gemäß Anspruch 3, wobei die photosensitive Schicht weiter ein photothermisches Umwandlungsmaterial umfasst, das absorbiertes Licht in Wärme umwandeln kann, und ein alkalilösliches Harz.

5. Basisplatte für eine lithografische Druckplatte gemäß Anspruch 3, wobei die photosensitive Schicht weiter eine Quinondiazid-Verbindung und ein alkalilösliches Harz umfasst.

## Revendications

1. Copolymère comprenant des unités monomères montrées dans les formoles (I) et (II) : 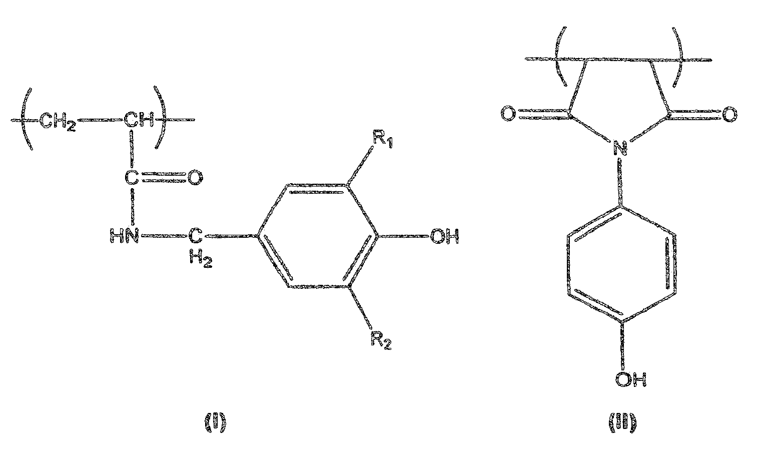 où R₁ et R₂ indiquent chacun indépendamment un groupe C₁ à C₁₂ alkyle.

2. Composition formant des images comprenant le copolymère selon la revendication 1.

3. Plaque de base pour planche d'impression lithographique comprenant une structure de support et sur celle-ci une couche photosensible qui comprend le copolymère selon la revendication 1.

4. Plaque de base pour planche d'impression lithographique selon la revendication 3 où la couche photosensible comprend en outre un matériau de conversion photothermique qui peut convertir la lumière absorbée en chaleur, et une résine soluble dans les alcalis.

5. Plaque de base pour planche d'impression lithographique selon la revendication 3 à la couche photosensible comprend en outre un composé quinone diazide et une résine soluble dans les alcalis.
